# EUROPÄISCHE PATENTSCHRIFT

(11) **EP 2 511 556 B1**
(45) Veröffentlichungstag und Bekanntmachung des Hinweises auf die Patenterteilung: **11.06.2014**
(21) Anmeldenummer: 12002190.2
(22) Anmeldetag: 27.03.2012
(51) Int. Cl.: F16D 27/112, F16D 27/14

(54) **Sternfeder und ein Verfahren zu ihrer Herstellung**
Star spring and method for its production
Ressort en étoile et l'un de ses procédés de fabrication

(30) Priorität: 13.04.2011 DE 102011016948
(43) Veröffentlichungstag der Anmeldung: 17.10.2012
(73) Patentinhaber: Kern Antriebstechnik GmbH, 88046 Friedrichshafen (DE)
(72) Erfinder: Bäumer, Jürgen, 88677 Markdorf (DE)
(74) Vertreter: Stadler, Franz

(56) Entgegenhaltungen:
- WO-A2-2006/122517
- WO-A2-2011/001132
- DE-A1-102004 040 251
- DE-C1- 4 416 949
- DE-U- 7 021 658
- FR-A1- 2 883 054

## Beschreibung

Die Erfindung betrifft eine Sternfeder nach dem Oberbegriff des Anspruchs 1 und ein Verfahren zu ihrer Herstellung.

Sternfedern werden als Rückstellfedern bei elektromagnetisch betätigten Kupplungen oder Bremsen oder Kupplungs-Bremskombinationen verwendet. Sie bestehen aus einem ringscheibenförmigen Grundkörper, von dem aus mehrere, radial nach innen oder nach außen gerichtete Finger ausgehen. Der Grundkörper ist in der Regel an einem lageunveränderlichen Bauteil befestigt, während die freien Enden der Finger in einer umlaufenden Nut am Ankerteil angreifen oder an einer Ankerplatte befestigt sind.

Aus der DE 28 44 925 A 1 ist eine elektromagnetische Kupplung oder Bremse bekannt, deren Rückstellfeder eine Sternfeder ist. In der bevorzugten Ausführungsform sind die Finger der Sternfeder radial nach außen weisend am Umfang vorgesehen, wobei es sich als zweckmäßig erweisen kann, dass die Sternfeder aus mehreren Segmenten besteht.

Ferner ist aus der DE 10 2004 040 251 A 1 eine Kupplungs-Bremskombination bekannt, die als Rückstellfeder eine Ringfeder mit sternförmig radial nach außen weisenden Laschen besitzt. Die Laschen sind zwischen zwei Ankerplatten mittels Schrauben eingespannt und durch radial innen liegende Arme miteinander verbunden, die im Wesentlichen konzentrisch zu einer Rotationsachse verlaufen. Die Arme sind zwischen den Laschen über Stege mit einem inneren Ringbereich verbunden. Dieser ist mittels Schrauben an einer Mitnehmernabe befestigt.

Der Erfindung liegt die Aufgabe zugrunde, eine Sternfeder so zu gestalten, dass sie einfach und kostengünstig herzustellen ist. Sie wird gemäß der Erfindung durch die Merkmale des Anspruchs 1 gelöst. Weitere vorteilhafte Ausgestaltungen ergeben sich aus den Unteransprüchen.

Nach der Erfindung sind die Federsektoren durch Trennfugen voneinander getrennt, die im Bereich des Grundkörpers zwischen den Fingern angeordnet sind. Dadurch entstehen zu einer Sternfeder mehrere relativ kleine Federelemente, die in einem Schnittmuster auf einem Federblech günstig angeordnet werden, wodurch der Verschnitt auf ein Minimum reduziert wird. So können aus einem üblichen Federblech Federsektoren für siebenundzwanzig Sternfedern mit sechs Fingern geschnitten werden im Vergleich zu vierzehn üblichen, ungeteilten Sternfedern. Dadurch können die Fertigungskosten erheblich reduziert werden. Im einfachen Anwendungsfall können die Trennfugen in radialer Richtung gradlinig verlaufen. Es kann jedoch vorteilhaft sein, dass Begrenzungen der Trennfugen in radialer Richtung Formschlussprofile auf weisen, die in montiertem Zustand ineinander greifen. Dadurch können sich die einzelnen Federsektoren gegenseitig zentrieren und/oder abstützen.

Die Federsektoren können durch Schrauben an einer Mitnehmernabe befestigt werden. Dafür kann das Lochbild für die Schraubenlöcher der üblichen ungeteilten Sternfeder verwendet werden, bei dem jeweils ein Schraubenloch in Umfangsrichtung etwa mittig zu dem jeweiligen Federsektor bzw. Finger angeordnet ist. Ferner können gemäß einer Ausgestaltung der Erfindung zusätzliche Schraubenlöcher in den Trennfugen vorgesehen werden. Dabei kann es zweckmäßig sein, dass eine Druckplatte die Trennfuge überbrückt, so dass im Bereich der Trennfuge eine günstige Kraftübertragung gewährleistet ist. Nach einer anderen Ausgestaltung der Erfindung ist in Umfangsrichtung zu beiden Seiten einer jeden Trennfuge in ihrer Nähe ein Schraubenloch vorgesehen. Dadurch wird im Bereich der Trennfuge eine günstige Befestigung der Federsektoren erreicht. Auch hierbei können die Verhältnisse durch eine Druckplatte verbessert werden, die die Trennfuge überbrückt und mit den zugeordneten Schrauben an der Mitnehmernabe befestigt ist.

Eine solche Sternfeder stellt eine günstige Rückstellfeder für elektromagnetisch betätigbare Kupplungen oder Bremsen oder Kupplungs-Bremskombinationen dar, die in einem günstigen Herstellungsverfahren gefertigt werden kann, indem einzelne Federsektoren aus einem Blech, z. B. durch Laserstrahlen, ausgeschnitten und bei der Montage zu einer Sternfeder zusammengesetzt werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Teillängsschnitt durch eine Kupplungs-Bremskombination mit einer erfindungsgemäßen Sternfeder,
- Fig. 2: eine Draufsicht auf eine erfindungsgemäße Sternfeder mit sechs radialen Fingern,
- Fig. 3: eine Variante zu Fig. 2,
- Fig. 4: ein Sektorelement nach Fig. 2,
- Fig. 5: eine Variante zu Fig. 4,
- Fig. 6: eine Variante zu Fig. 4,
- Fig. 7: eine Blechtafel mit einem Schnittmuster für Sektorelemente nach Fig. 4 und
- Fig. 8: eine Blechtafel nach Fig. 7 mit einem Schnittmuster für eine konventionelle Sternfeder mit sechs Fingern.

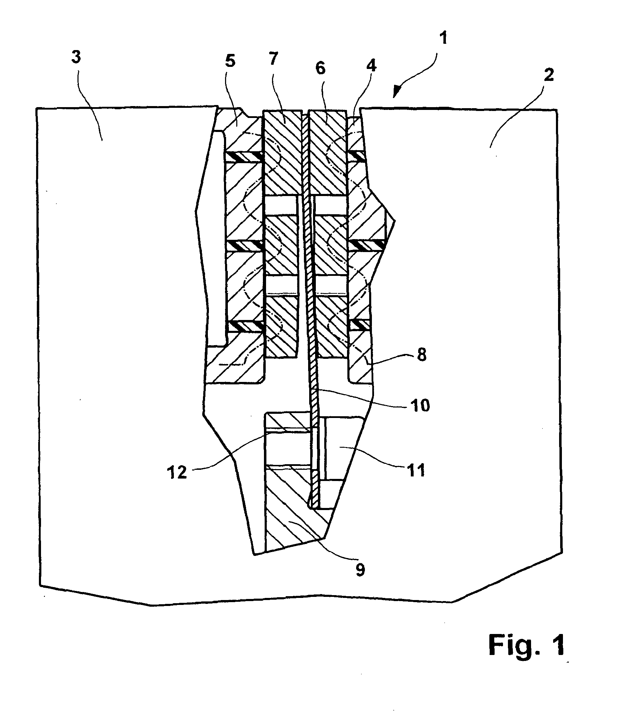

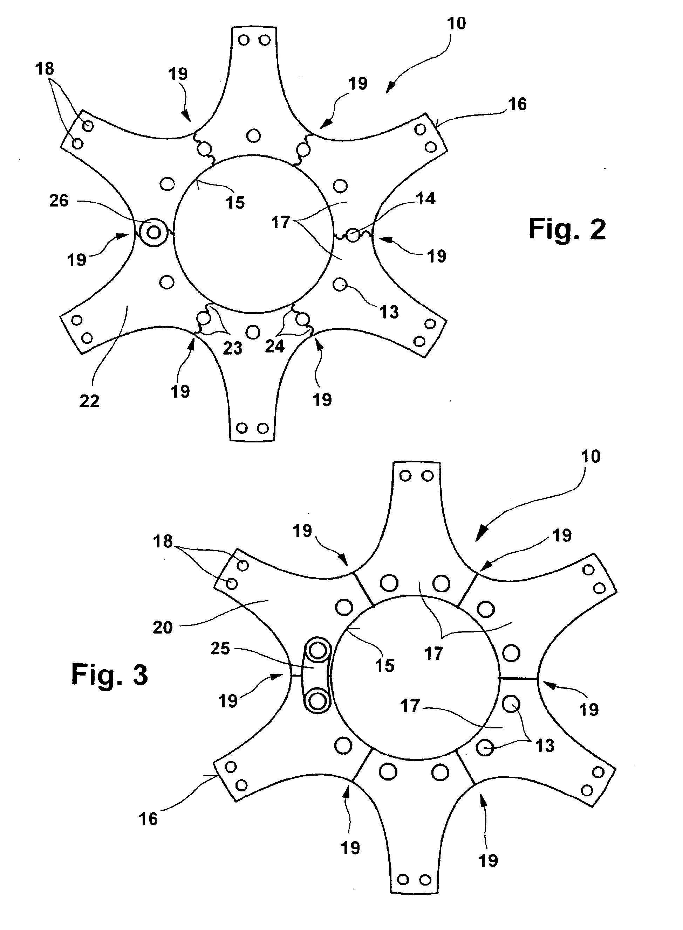

Die in Fig. 1 dargestellte Kupplungs-Bremskombination besitzt ein Bremsteil 2 mit einem Polring 4 und ein Kupplungsteil 3 mit einem Polring 5. Zwischen den Polringen 4 und 5 sind Ankerplatten 6 und 7 angeordnet, die alternativ von den Polringen 4 und 5 durchflutet werden. Die Durchflutung 8 ist durch eine strichpunktierte Linie angedeutet. Zwischen den Ankerplatten 6 und 7 ist eine Sternfeder 10 vorgesehen. Diese besitzt in der Ausführung nach Fig. 2 und Fig. 3 einen Grundkörper 17, an dem radial nach außen gerichtete Finger angeformt sind. Die Sternfeder 10 wird in radialer Richtung von einem Innenkreis 15 und von einem Außenkreis 16 begrenzt. Ferner ist der Grundkörper 17 durch Trennfugen 19 geteilt, die zwischen zwei benachbarten Fingern im Wesentlichen radial verlaufen, sodass Federsektoren 20, 21, 22 entstehen.

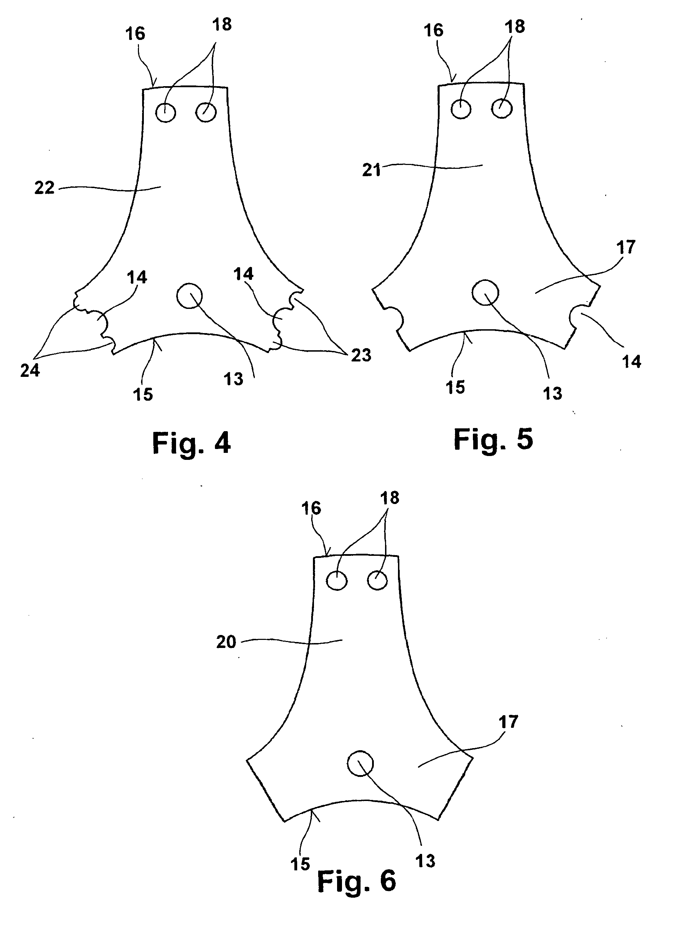

Die Federsektoren 20, 21, 22 sind in den Fig. 4 bis 6 als Einzelelemente dargestellt. Der Federsektor 20 besitzt im Bereich des Grundkörpers 17 gradlinige radiale Begrenzungen, die in montiertem Zustand die Begrenzung einer Trennfuge 19 bilden. Zur Befestigung des Federsektors 20 an einer Mitnehmernabe dient ein Schraubenloch 13, das in Umfangsrichtung gesehen in der Mitte des Grundkörperbereichs 17 angeordnet ist. Durch das Schraubenloch 13 wird eine Schraube 11 gesteckt, die in eine Gewindebohrung 12 der Mitnehmernabe 9 eingreift. Die Mitnehmernabe 9, der Bremsteil 2 und der Kupplungsteil 3 sind axial zueinander fixiert.

Die Federsektoren 20, 21, 22 besitzen im Bereich ihres Außenkreises 16 zwei Schraubenlöcher 18, die in Umfangsrichtung zueinander versetzt sind, und die zur Befestigung 20 der Federsektoren 20, 21, 22 bzw. der Sternfeder 10 an den Ankerplatten 6, 7 dienen. Die axiale Lage des Bremsteils 2, des Kupplungsteils 3 und der Mitnehmernabe 9 ist so aufeinander abgestimmt, dass im stromlosen Zustand der Kupplungs-Bremskombination 1 die Ankerplatte 6 an dem Polring 4 des Bremsteils 2 unter einer Vorspannung der Sternfeder 10 anliegt. Wird der Elektromagnet des Kupplungsteils 3 bestromt, wird die Ankerplatte 7 von dem Polring 5 angezogen, sodass sie an der zugewandten Stirnseite des Polrings 5 zur Anlage gelangt. Für die axiale Verschiebung der Ankerplatten 6, 7 ist zwischen den Ankerplatten 6, 7 ein ausreichender Spalt vorgesehen.

Die Federsektoren 20 in der Ausführung nach Fig. 3 unterscheiden sich von dem Federsektor 20 in der Ausführung nach Fig. 6 durch ein geändertes Lochbild der Schraubenlöcher 13. Hierbei sind je Federsektor 20 im Bereich des Grundkörpers 17 zwei Schraubenlöcher 13 vorgesehen, sodass zu beiden Seiten einer Trennfuge 19 in geringem Abstand zu dieser ein Schraubenloch 13 angeordnet ist. Zur besseren Verteilung des Anpressdrucks der Schrauben 11 auf die Federsektoren 20 im Bereich der Trennfuge 19 sind Druckplatten 25 vorgesehen, die die zugeordnete Trennfuge 19 überbrücken und mit den entsprechenden Schrauben 11 mit dem Federsektor 20 an der Mitnehmernabe 9 befestigt sind.

Der Federsektor 21 nach Fig. 5 unterscheidet sich von dem Federsektor 20 nach Fig. 6 dadurch, dass im Bereich der Trennfuge 19 ein zusätzliches Schraubenloch 14 angeordnet ist, das durch die Trennfuge 19 in zwei Hälften geteilt wird. In diesem Fall wird die Trennfuge 19 zweckmäßigerweise zur besseren Druckverteilung durch eine Druckplatte 26 in Form einer Ringscheibe überbrückt.

Der Federsektor 22 nach Fig. 2 und Fig. 4 unterscheiden sich von dem Federsektor 21 dadurch, dass die Begrenzung der Trennfugen in radialer Richtung Profile 23 und 24 aufweist, die zueinander passen und in montiertem Zustand ineinander eingreifen. Dabei können an einem Federsektor 22 gleiche Profile 23 angeordnet sein, während an den benachbarten Federsektoren 22 passende Profile 24 vorgesehen sind. Um jedoch gleiche Federsektoren 22 zu verwenden, ist es zweckmäßig, dass alle Federsektoren 22 in Umfangsrichtung alternierend ein Profil der einen Art 23 und an der anderen Seite das Profil der dazu passenden Art 24 besitzen.

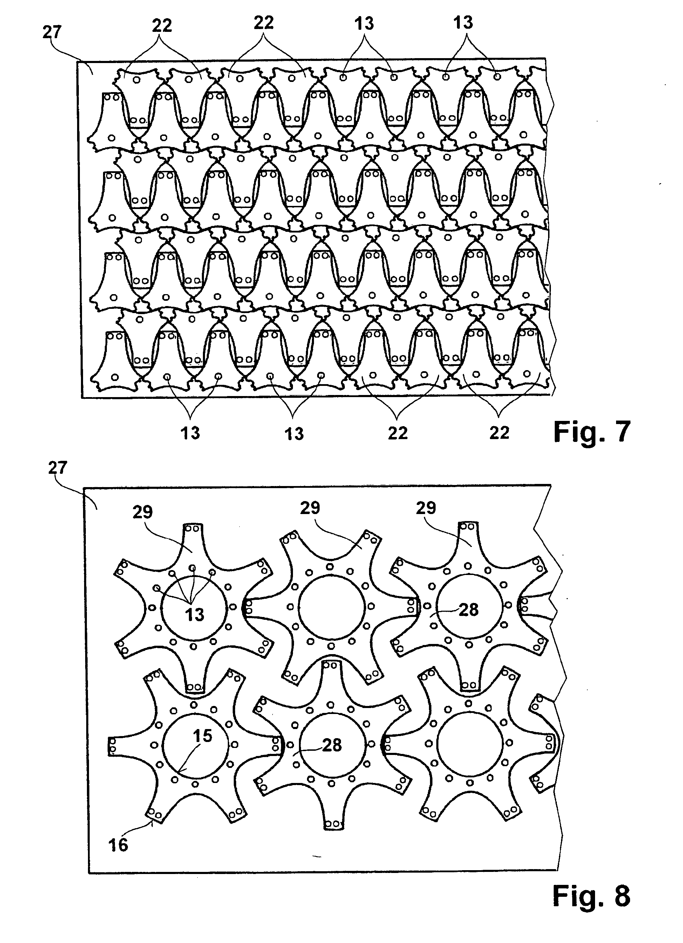

In Fig. 7 ist eine Blechtafel 27 dargestellt, die ein Schnittmuster für Federsektoren 22 einer sechsfingerigen Sternfeder 10 zeigt. Bei dieser Anordnung können aus einem üblichen Federblech 27 Federsektoren 22 für 27 Sternfedern zum Beispiel durch Laserstrahlen geschnitten werden. Demgegenüber können aus dem gleichen Federblech 27 nur maximal vierzehn ungeteilte Sternfedern 28 mit jeweils sechs Fingern 29 üblicher Bauart gefertigt werden.

## Patentansprüche

1. Sternfeder (10) mit einem ringscheibenförmigen Grundkörper (17), an dem mehrere radial nach innen oder nach außen gerichtete Finger angeformt sind, die mit dem Grundkörper (17) gleichartige Federsektoren (20, 21, 22) bilden, wobei die Federsektoren (20, 21, 22) in radialer Richtung von einem Innenkreis (15) und von einem Außenkreis (16) begrenzt werden,
**dadurch gekennzeichnet, dass**
die Federsektoren (20, 21, 22) durch Trennfugen (19) voneinander getrennt sind, die im Bereich des Grundkörpers (17) zwischen den Fingern angeordnet sind.

2. Sternfeder nach Anspruch 1,
**dadurch gekennzeichnet, dass**
die Trennfugen (19) in radialer Richtung geradlinig verlaufen.

3. Sternfeder nach Anspruch 1,
**dadurch gekennzeichnet, dass**
die Begrenzungen der Trennfugen (19) in radialer Richtung Formschlussprofile (23, 24) aufweisen, die in montiertem Zustand ineinander greifen.

4. Sternfeder nach einem der vorhergehenden Ansprüche,
**dadurch gekennzeichnet, dass**
in den Trennfugen (19) jeweils ein Schraubenloch (14) vorgesehen ist.

5. Sternfeder nach einem der Ansprüche 1 bis 3,
**dadurch gekennzeichnet, dass**
in Umfangsrichtung zu beiden Seiten einer jeden Trennungsfuge (19) in ihrer Nähe ein Schraubenloch (14) vorgesehen ist.

6. Sternfeder nach einem der vorhergehenden Ansprüche,
**dadurch gekennzeichnet, dass**
jede Trennfuge (19) im montierten Zustand der Federsektoren (20, 21, 22) durch eine Druckplatte (25, 26) überbrückt ist.

7. Sternfeder nach einem der vorhergehenden Ansprüche,
**gekennzeichnet durch**
die Verwendung als Rückstellfeder einer elektromagnetisch betätigbaren Kupplung, Bremse oder Kupplungs-Bremskombination (10), wobei die Federsektoren (20, 21, 22) im Bereich ihres Innenkreises (15) an einer Mitnehmernabe (9) und im Bereich ihres Außenkreises (16) an einer Ankerplatte (6, 7) befestigt sind.

8. Verfahren zu Herstellung einer Sternfeder (10),
**dadurch gekennzeichnet, dass**
einzelne Federsektoren (20, 21, 22) aus einem Federblech (27) ausgeschnitten und bei der Montage zu einer Sternfeder (10) zusammengesetzt werden und
dass
die Federsektoren (20, 21, 22) die Merkmale mindestens eines der Ansprüche 2 bis 6 aufweisen.

## Claims

1. Star spring (10) with a annular and disk-shaped base body (17) and at the base body (17) several radial inwards or outwards directed fingers are shaped, which form with the base body (17) similar sectors of spring (20, 21, 22), whereby the sectors of spring (20, 21, 22) are limited in a radial direction by an inner circle (15) and an outer circle (16),
**characterized in that**
the sectors of spring (20, 21, 22) are separated from each other by interstices (19), which are in the field of the base body (17) located between the fingers.

2. Star spring according to claim 1,
**characterized in that**
the interstices (19) are formed in a radial straight-lined direction.

3. Star spring according to claim 1,
**characterized in that**
the boundaries of the interstices (19) in a radial direction are formed with positive locking contours, which in a mounted state gear into each other.

4. Star spring according to one of the preceding claims,
**characterized in that**
in each of the interstices (19) a bore for a screw is formed.

5. Star spring according to one of the claims 1 to 3,
**characterized in that**
in the direction of the circumference at both sides of each interstice (19) and in its proximity a bore for a screw is formed.

6. Star spring according to one of the preceding claims,
**characterized in that**
each interstice (19) in a mounted state of the sectors of spring (20, 21, 22) is bridged by a pressure plate (25, 26).

7. Star spring according to one of the preceding claims,
**characterized in that**
by the use of a return spring in a electromagnetically operated coupling, brake or a combination of a coupling and brake, whereby the sectors of spring (20, 21, 22) are in the field of their inner circles (15) fixed to a driving hub and in the field of their outer circles (16) fixed to an anchor plate.

8. Method for the production of a star spring (10),
**characterized in that**
individual sectors of spring (20, 21, 22) are cutted out from a spring steel sheet and by the assembling are added to a star spring (10) and the sectors of spring (20, 21, 22) have the features of at least one of the claims 2 to 6.

## Revendications

1. Ressort en étoile (10) comprenant un corps de base en forme de disque annulaire (17), sur lequel sont façonnés plusieurs doigts orientés radialement vers l'intérieur ou vers l'extérieur, lesquels forment avec le corps de base (17) des secteurs de ressort de même type (20, 21, 22), les secteurs de ressort (20, 21, 22) étant limités dans la direction radiale par un cercle interne (15) et par un cercle externe (16),
**caractérisé en ce que**
les secteurs de ressort (20, 21, 22) sont séparés les uns des autres par des joints de séparation (19) qui sont disposés dans la région du corps de base (17) entre les doigts.

2. Ressort en étoile selon la revendication 1,
**caractérisé en ce que**
les joints de séparation (19) s'étendent en ligne droite dans la direction radiale.

3. Ressort en étoile selon la revendication 1,
**caractérisé en ce que**
les limitations des joints de séparation (19) dans la direction radiale présentent des profilés à engagement par correspondance de forme (23, 24) qui s'engagent les uns dans les autres dans l'état monté.

4. Ressort en étoile selon l'une quelconque des revendications précédentes,
**caractérisé en ce**
**qu'**un trou de vis (14) est à chaque fois prévu dans les joints de séparation (19).

5. Ressort en étoile selon l'une quelconque des revendications 1 à 3,
**caractérisé en ce**
**qu'**un trou de vis (14) est prévu dans la direction périphérique des deux côtés de chaque joint de séparation (19) à proximité de celui-ci.

6. Ressort en étoile selon l'une quelconque des revendications précédentes,
**caractérisé en ce que**
chaque joint de séparation (19) est surmonté par une plaque de pression (25, 26) dans l'état monté des secteurs de ressort (20, 21, 22).

7. Ressort en étoile selon l'une quelconque des revendications précédentes,
**caractérisé par**
l'utilisation en tant que ressort de rappel d'un embrayage, d'un frein ou d'une combinaison embrayage-frein (10) à commande électromagnétique, les secteurs de ressort (20, 21, 22) dans la région de leur cercle interne (15) étant fixés à un moyeu d'entraînement (9) et dans la région de leur cercle externe (16) étant fixés à une plaque d'ancrage (6, 7).

8. Procédé de fabrication d'un ressort en étoile (10),
**caractérisé en ce que**
des secteurs de ressort individuels (20, 21, 22) sont découpés dans une tôle à ressort (27) et lors du montage sont assemblés pour former un ressort en étoile (10) et
**en ce que** les secteurs de ressort (20, 21, 22) présentent les caractéristiques d'au moins l'une des revendications 2 à 6.
